# FASCICULE DE BREVET EUROPEEN

(11) **EP 2 742 317 B1**
(45) Date de publication et mention de la délivrance du brevet: **18.03.2015**
(21) Numéro de dépôt: 12758529.7
(22) Date de dépôt: 01.08.2012
(51) Int. Cl.: G01B 7/02

(54) **INSTRUMENT DE MESURE DE LONGUEUR, PROCÉDÉ ET DISPOSITIF DE CONTRÔLE DIMENSIONNEL D'UN CRAYON DE COMBUSTIBLE**
INSTRUMENT ZUR LÄNGENMESSUNG SOWIE VERFAHREN UND VORRICHTUNG ZUR KONTROLLE DER GRÖSSE EINES BRENNSTABES
INSTRUMENT FOR MEASURING LENGTH, AND METHOD AND DEVICE FOR CONTROLLING THE SIZE OF A FUEL ROD

(30) Priorité: 08.08.2011 FR 1102483
(43) Date de publication de la demande: 18.06.2014
(73) Titulaire: Commissariat à l'Énergie Atomique et aux Énergies Alternatives, 75015 Paris (FR)
(72) Inventeur: RODIAC, Frédéric, F-13105 Mimet (FR)
(74) Mandataire: Marchand, André
(86) Numéro de dépôt international: PCT/FR2012/000322
(87) Numéro de publication internationale: WO 2013/021104

(56) Documents cités:
- GB-A- 2 218 227
- US-A- 4 306 208
- US-A- 5 687 487

## Description

### DOMAINE TECHNIQUE

La présente invention est relative à un instrument de mesure de longueur et à un dispositif de contrôle d'une dimension transversale d'un crayon de combustible comportant cet instrument.

L'invention est également relative à un procédé de contrôle dimensionnel d'un crayon de combustible à l'aide de cet instrument.

L'invention s'applique en particulier au contrôle des déformations radiales de la paroi externe de la gaine d'un crayon de combustible nucléaire.

### ETAT DE LA TECHNIQUE

En raison des contraintes mécaniques et thermiques exercées par les pastilles de combustible nucléaire sur la paroi - ou gaine - d'un conteneur tubulaire - ou crayon - contenant ces pastilles, cette paroi est susceptible de se déformer, par exemple par gonflement ou ovalisation, et il est parfois nécessaire de mesurer ou contrôler l'amplitude de la déformation de cette paroi.

A cet effet, il est généralement prévu d'extraire le crayon à contrôler de la piscine du réacteur dans lequel est placé le crayon, et de transporter le crayon jusqu'à une cellule blindée équipée d'instruments de mesure adaptés à la mesure de ces déformations.

La mesure, dans la cellule blindée, des déformations de la gaine du crayon peut s'effectuer en déplaçant, le long de l'axe longitudinal du crayon, la pointe de touche d'un capteur inductif de type LVDT (« Linear Voltage Differential Transformer »), c'est-à-dire fonctionnant sur le principe du transformateur différentiel.

Un tel capteur inductif comporte un corps allongé délimitant une cavité tubulaire dans laquelle un noyau ferromagnétique est monté coulissant selon l'axe longitudinal de la cavité, et une pointe de touche solidaire du noyau, s'étendant hors de la cavité, dans le prolongement du corps, et destinée à être mise au contact d'un objet à mesurer.

Le corps de ce capteur inductif comporte en outre un bobinage primaire prévu pour être alimenté par un générateur de signaux, et des bobinages secondaires délivrant des signaux lorsque le bobinage primaire est alimenté, ces signaux variant selon la position relative du noyau et des bobinages, de sorte que l'analyse des signaux permet de déterminer la position du noyau - et par conséquent de la pointe de touche - par rapport au corps du capteur.

S'agissant d'un crayon irradié, les opérations de transfert et de transport du crayon sont complexes et coûteuses.

Pour la mesure de l'épaisseur d'oxyde à la surface d'un crayon de combustible, il a été décrit dans le brevet FR2817338 un dispositif de mesure comportant une sonde à courant de Foucault immergée dans une piscine. Ce type de sonde n'est cependant pas adapté à la mesure du diamètre de la face externe d'un crayon de combustible.

En effet, cette technologie se prête principalement au contrôle d'une zone proche d'une surface, notamment pour mesurer l'épaisseur d'une couche d'isolant sur un matériau conducteur, et pour détecter des fissures ou hétérogénéités dans une pièce.

Pour pouvoir réaliser des contrôles dimensionnels (d'épaisseur) par courants de Foucault, la pièce à contrôler doit être homogène, ce qui n'est pas le cas d'un crayon de combustible comportant une gaine en alliage inoxydable ou de type Zircaloy, qui contient des pastilles pouvant présenter des fissures et entre lesquelles peuvent exister des volumes « vides ».

Par ailleurs, les capteurs de type LVDT présentant une précision suffisante pour mesurer une déformation de faible amplitude, ne peuvent pas être utilisés sous l'eau, et les capteurs LVDT conçus pour être immergées ne présentent pas une précision suffisante.

US 4 306 208 décrit un levier de commande qui indique un déplacement longitudinal. GB 2 218 227 décrit un instrument de mesure de longueur. US 5 687 487 décrit un instrument de mesure de longueur.

### EXPOSÉ DE L'INVENTION

Un objectif de l'invention est de proposer un instrument de mesure de longueur selon la revendication 1, un dispositif de contrôle dimensionnel d'un crayon de combustible comportant cet instrument selon la revendication 8, et un procédé de contrôle dimensionnel d'un crayon de combustible à l'aide de cet instrument selon la revendication 14, qui soient améliorés et/ou qui remédient, en partie au moins, aux lacunes ou inconvénients des instruments, procédés, et dispositifs connus.

Un objectif de l'invention est de proposer un instrument de mesure de longueur présentant une précision de l'ordre du micron ou de quelques microns, et adapté pour mesurer, sous l'eau et en présence de radiations, la déformation radiale de la face externe de la gaine d'un crayon de combustible, par exemple par gonflement ou ovalisation, ainsi qu'un procédé et un dispositif de profilométrie utilisant (respectivement incluant) cet instrument de mesure.

Selon un aspect de l'invention, il est proposé un instrument de mesure de longueur comportant un capteur inductif comportant un corps allongé et une pointe de touche mobile par rapport au corps selon un axe longitudinal ; le corps du capteur inductif contient des bobinages et délimite une première cavité recevant un noyau (ferro)magnétique relié à la pointe de touche; l'instrument comporte en outre un corps creux formant une enveloppe qui prolonge le corps du capteur inductif selon l'axe longitudinal et qui délimite, avec le corps du capteur, une seconde cavité étanche renfermant la pointe de touche ; et la capacité de déformation élastique de l'enveloppe, selon l'axe longitudinal (du corps et du capteur), est grande devant - i.e. supérieure à - la capacité de déformation élastique de l'enveloppe selon des axes orthogonaux à cet axe longitudinal.

Ainsi, lorsque l'instrument est immergé, l'enveloppe peut se déformer axialement pour transmettre à la pointe de touche des efforts d'appui s'exerçant sur une partie de l'enveloppe, tout en permettant le déplacement de la pointe de touche dans la seconde cavité.

A cet effet, l'enveloppe peut comporter une pièce déformable étanche à l'air et à l'eau, entourant la pointe de touche, et présentant une faible raideur mécanique selon un axe sensiblement confondu avec l'axe longitudinal du corps ; cette pièce déformable peut présenter une forme de révolution selon cet axe longitudinal; cette pièce déformable peut présenter une raideur axiale - c'est-à-dire selon l'axe de révolution - faible, et une raideur radiale bien supérieure à la raideur axiale.

Cette pièce déformable peut présenter une forme tubulaire annelée, et peut être essentiellement constituée par un soufflet.

Dans ce cas notamment, le rapport de la raideur radiale de la pièce déformable (et/ou de l'enveloppe) à sa raideur axiale, peut être supérieur à 10, en particulier supérieur à 100 ou 1000.

Selon des modes de réalisation, l'enveloppe ou le soufflet peuvent présenter une raideur axiale qui est située dans une plage allant de 1 Newton par millimètre (N/mm) environ, jusqu'à 10 N/mm environ.

Selon un mode de réalisation, la capacité de déformation élastique de l'enveloppe selon l'axe longitudinal du capteur est suffisante pour que la pointe de touche soit sensible au déplacement d'une partie de l'enveloppe - dite partie d'appui - s'étendant dans le prolongement de la pointe de touche, sous l'effet d'un effort d'appui exercé par un objet à mesurer sur cette partie d'appui de l'enveloppe.

En d'autres termes et selon un autre aspect de l'invention, il est proposé un instrument de mesure de longueur comportant un capteur inductif, généralement de type LVDT, dans lequel la pointe de touche s'étend à l'intérieur d'une enveloppe étanche solidaire du corps du capteur ; l'enveloppe comporte un soufflet présentant un axe longitudinal qui correspond à l'axe de plus grande déformation élastique du soufflet, et qui est sensiblement confondu avec l'axe de coulissement de la pointe de touche ; le soufflet est fixé (de façon étanche) au corps du capteur par une première de ses extrémités longitudinales ; l'enveloppe comporte en outre un tampon obturant le soufflet à sa deuxième extrémité longitudinale, et la raideur longitudinale (axiale) du soufflet est choisie suffisamment faible pour que le tampon puisse se déplacer selon l'axe longitudinal du soufflet, sur une partie substantielle au moins de la course de la pointe de touche du capteur inductif, au contact de celle-ci, de sorte que le déplacement relatif du tampon placé au contact d'un objet à mesurer, par rapport au corps du capteur, est transmis à la pointe de touche - et au noyau magnétique du capteur inductif -, la face externe du tampon servant alors de pointe de touche pour l'instrument.

La course de la pointe de touche du capteur inductif, c'est-à-dire l'amplitude maximale de son déplacement en translation selon l'axe longitudinal du corps, peut par exemple être située dans une plage allant de un ou quelques millimètre(s), jusqu'à une ou plusieurs dizaines de millimètres.

Selon un mode de réalisation particulièrement adapté à la mesure d'une dimension transversale d'un crayon de combustible immergé dans une piscine, la partie de l'enveloppe s'étendant dans le prolongement de la pointe de touche du capteur inductif, en particulier ledit tampon, est distant(e) de la pointe de touche du capteur inductif lorsque l'instrument est à la pression atmosphérique, tandis que cette partie de l'enveloppe vient au contact de la pointe de touche du capteur inductif lorsque l'instrument est placé dans un milieu où règne une pression supérieure à la pression atmosphérique.

En particulier, la section transversale de l'enveloppe - le cas échéant le diamètre du soufflet - ainsi que la raideur axiale de l'enveloppe - respectivement du soufflet - peuvent être choisis de manière à compenser l'effort dû à la différence entre la pression d'air régnant dans la cavité recevant la pointe de touche et la pression d'immersion de l'instrument, afin d'assurer un contact entre la pointe de touche du capteur et la partie d'appui de l'enveloppe - ou tampon - formant la pointe de touche de l'instrument.

Une partie au moins de l'enveloppe déformable, en particulier le soufflet ou le tampon, peut (peuvent) être métallique(s).

Selon un autre aspect de l'invention, il est proposé un dispositif de contrôle de la géométrie de la face externe d'un crayon de combustible nucléaire, qui comporte au moins un instrument de mesure de longueur tel que décrit dans la présente demande.

Selon des modes de réalisation du dispositif de contrôle de géométrie d'un crayon de combustible:
- le dispositif peut comporter une structure fixe et un support d'instrument qui est mobile en translation par rapport à la structure fixe, selon au moins un axe, en particulier selon un premier axe et selon au moins un second axe perpendiculaire au premier axe; en particulier, le support d'instrument peut comporter une table à mouvements (X, Y) croisés portant des contre touches et autorisant un déplacement relatif, selon au moins le second axe, des contre touches et d'un crayon à contrôler ;
- le support d'instrument peut recevoir (au moins) deux instruments de mesure de longueur tels que décrit dans la présente demande : i) un premier instrument dont l'axe de déformation privilégiée
- c'est-à-dire l'axe de moins grande raideur - de l'enveloppe déformable est sensiblement orthogonal à l'axe (audit premier axe) de translation du support d'instrument ; et ii) un second instrument, sensiblement identique au premier instrument, dont l'axe de moins grande raideur de l'enveloppe déformable est sensiblement orthogonal à l'axe de translation du support d'instrument ainsi qu'à, le cas échéant, l'axe de déformation privilégiée du premier instrument;
- le support d'instrument peut comporter deux pièces ou portions fixes servant de contre touches pour un crayon à contrôler, deux pièces mobiles servant de touches de mesure et sur lesquelles s'appuient, directement ou indirectement, lesdites parties d'appui d'enveloppe (i.e. lesdits tampons), et des moyens de rappel servant à maintenir la surface externe d'un crayon à contrôler au contact de ces touches de mesure et contre touches.

Selon un autre aspect de l'invention, il est proposé un procédé de contrôle de la géométrie de la face externe d'un crayon de combustible nucléaire, dans lequel on immerge des instruments de mesure de longueur tels que décrits dans la présente demande, dans une piscine contenant le crayon, et on utilise ces instruments pour mesurer une dimension transversale du crayon.

L'invention permet de réaliser « in situ » (sous eau) un contrôle métrologique précis de crayons irradiés, sans nécessiter un transport des crayons hors de leur lieu d'utilisation.

D'autres aspects, caractéristiques, et avantages de l'invention apparaissent dans la description suivante qui se réfère aux figures annexées et illustre, sans aucun caractère limitatif, des modes préférés de réalisation de l'invention.

### BREVE DESCRIPTION DES FIGURES

La figure 1 est une vue schématique d'un dispositif servant à contrôler le diamètre d'un crayon de combustible nucléaire immergé dans une piscine, à différentes positions le long de ce crayon, afin établir un profil des variations de ce diamètre le long de l'axe longitudinal du crayon.
La figure 2 est une vue schématique d'une partie du dispositif de la figure 1, qui comporte deux instruments de mesure du « diamètre » d'un crayon, respectivement selon deux axes de mesure qui sont orthogonaux et perpendiculaires à l'axe longitudinal du crayon.
La figure 3 est une vue en coupe longitudinale schématique d'un instrument de mesure apte à équiper le dispositif des figures 1 et 2, qui illustre les deux parties du corps de l'instrument séparées l'une de l'autre.
La figure 4 est une vue en coupe longitudinale schématique de l'instrument de mesure de la figure 3, dans laquelle les deux parties du corps de l'instrument sont assemblées.
La figure 5 est une vue en coupe longitudinale schématique d'une variante de réalisation de l'enveloppe à soufflet de l'instrument de mesure des figures 3 et 4, et illustre schématiquement l'utilisation de cette enveloppe pour un instrument effectuant des mesures dans une grande plage de profondeur d'immersion de l'instrument.

### DESCRIPTION DETAILLEE DE L'INVENTION

Sauf indication explicite ou implicite contraire, des éléments ou organes - structurellement ou fonctionnellement - identiques ou similaires sont désignés par des repères identiques sur les différentes figures.

Sauf indication contraire, dans la présente demande, les termes « capteur » et « palpeur » sont synonymes et donc interchangeables.

Sauf indication explicite ou implicite contraire, dans la présente demande, les termes « axial(e) », « radial(e) », « axialement », et « radialement », sont utilisés par référence à un axe tel que l'axe longitudinal d'un crayon, l'axe longitudinal de l'instrument, l'axe de translation de la pointe de touche du capteur inductif, ou l'axe longitudinal du corps du capteur inductif, ces trois derniers axes pouvant être confondus.

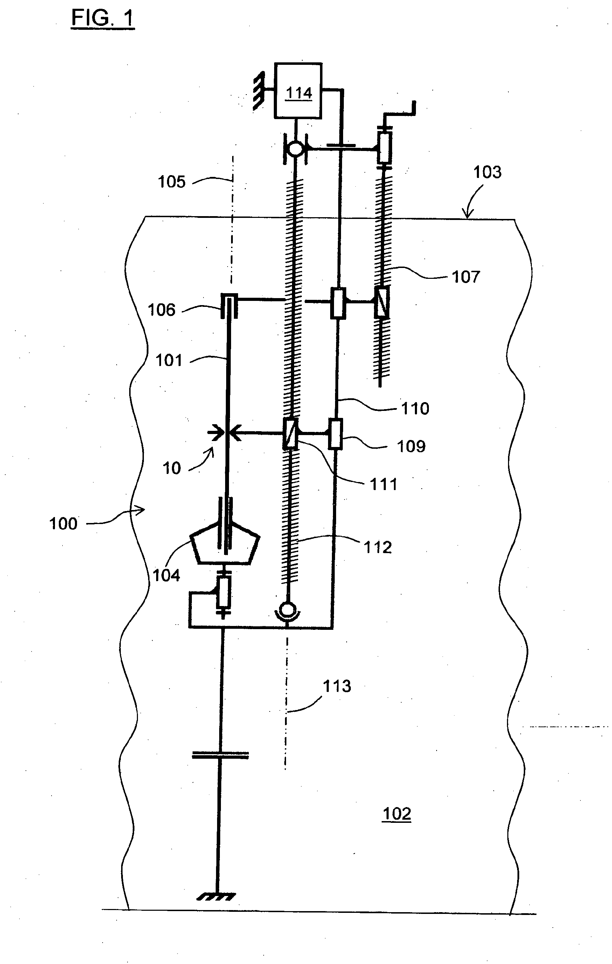

Par référence à la figure 1 notamment, le dispositif - ou banc - 100 de contrôle dimensionnel permet de mesurer une dimension radiale - ou diamètre - d'un crayon 101 de combustible nucléaire s'étendant verticalement à l'intérieur d'une piscine remplie d'eau 102.

A cet effet, la majeure partie (inférieure) du banc 100 de profilométrie est immergée sous le niveau 103 de l'eau ; la partie supérieure (émergeante) du banc est accessible à des opérateurs qui peuvent positionner un crayon à contrôler sur le banc, sous l'eau, avec une pince (non représentée) commandée à distance.

Le crayon 101 peut par exemple présenter une longueur - ou hauteur - de l'ordre d'un mètre, et son extrémité supérieure peut être immergée sous un mètre d'eau environ.

La partie inférieure du crayon 101 est maintenue en place par un dispositif 104 de fixation dont on peut régler la position angulaire (selon l'axe longitudinal 105 du crayon).

La partie supérieure du crayon 101 est maintenue en position par une contrepointe 106 dont la hauteur peut être réglée manuellement en actionnant une vis de réglage 107.

La contrepointe 106 peut comporter un étalon consistant essentiellement en une pièce cylindrique de section circulaire, s'étendant dans le prolongement de l'extrémité supérieure du crayon à contrôler, et dont le diamètre correspond à la valeur nominale du diamètre du crayon, afin de permettre un calibrage des instruments de mesure par une mesure du (des) diamètre(s) de cet étalon.

Le positionnement angulaire du crayon peut être contrôlé avec une caméra et un index (non représentés).

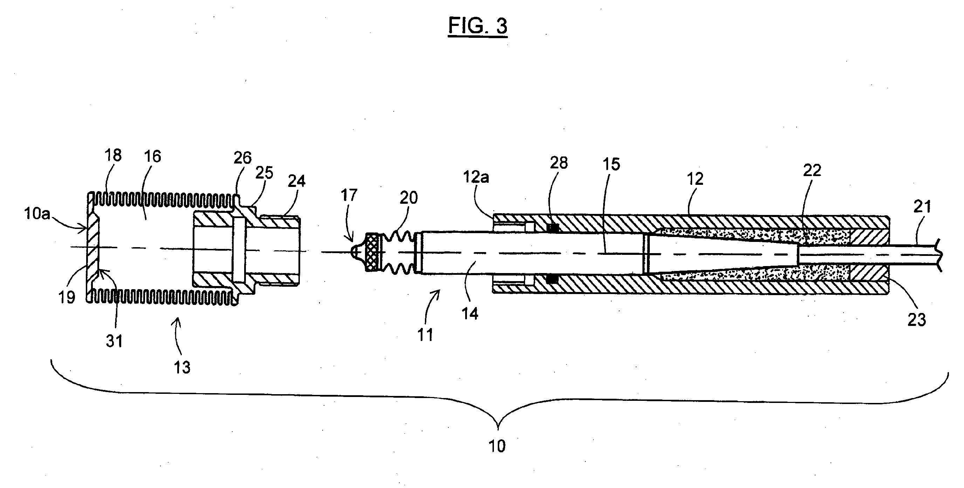

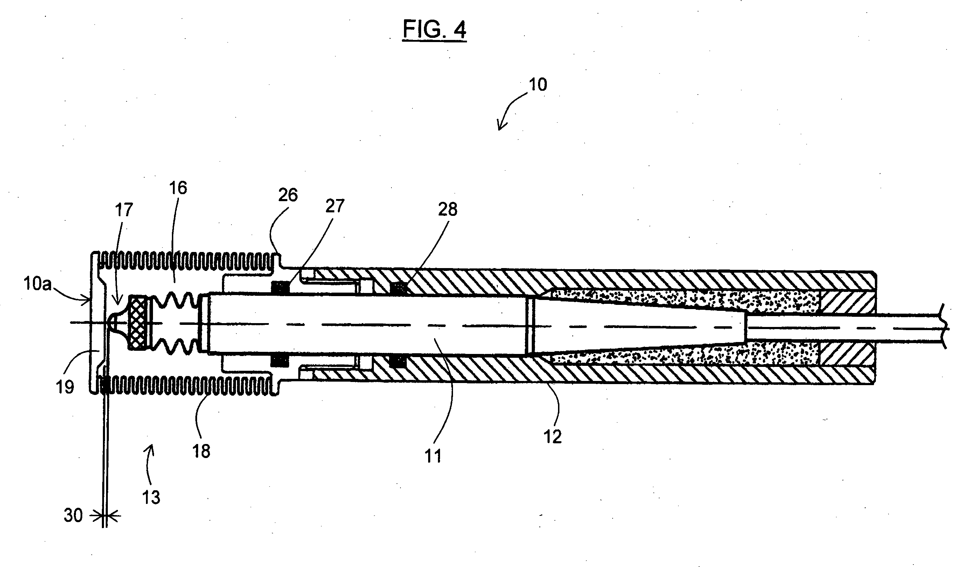

Le dispositif 100 comporte deux instruments 10 de mesure de longueur illustrés en détail en figures 3 et 4.

Les instruments 10 de mesure sont supportés par un chariot 108. Le chariot 108 et les instruments 10 peuvent être déplacés verticalement le long du crayon.

A cet effet, le chariot 108 est solidaire d'un patin 109 coulissant sur un guide 110 vertical, ainsi que d'un écrou 111 coopérant avec une vis 112 s'étendant également verticalement.

L'entrainement en rotation de la vis 112, selon son axe longitudinal 113, par un moteur 114, provoque ainsi le déplacement du support 108 et des instruments 10 le long du crayon 101.

Un capteur de position, tel qu'un codeur rotatif solidaire de la vis 112, peut être prévu pour délivrer une information relative à la position verticale du chariot 108.

Pour examiner un crayon combustible, on maintient le crayon fixe et on fait défiler les instruments 10 le long du crayon.

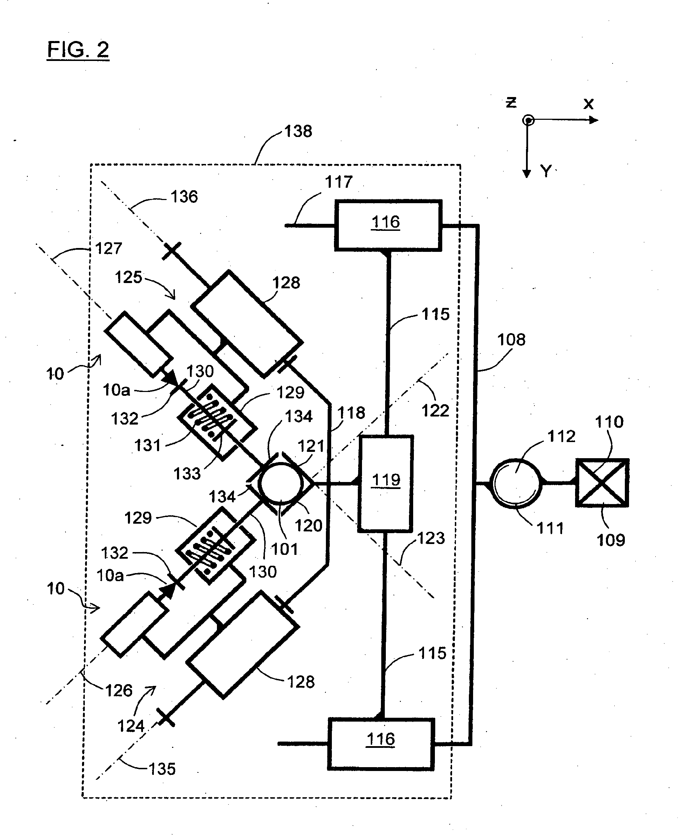

Par référence à la figure 2 notamment, les instruments 10 sont solidarisés au support 108 d'instrument qui est monté coulissant selon l'axe Z vertical, par l'intermédiaire de plusieurs supports:
- un premier support 115 est équipé de deux coulisseaux 116 respectivement engagés sur deux guides 117 parallèles à l'axe X horizontal, de sorte que le support 115 peut librement coulisser selon cet axe X par rapport au support 108 ;
- un second support 118 est équipé d'un coulisseau 119 engagé sur un guide intégré au support 115 et parallèle à un axe Y horizontal et perpendiculaire à l'axe X, de sorte que le support 118 peut librement coulisser selon cet axe Y par rapport au support 115.

Les supports 115, 118 et les coulisseaux et guides associés forment ainsi une table à mouvements X, Y croisés.

Le support 118 porte deux contre touches 120, 121 qui sont agencées pour pouvoir être en appui sur la face externe du crayon 101 à contrôler, respectivement selon deux génératrices de cette face externe généralement cylindrique et de section circulaire, ces deux génératrices étant « espacées » angulairement de 90 degrés environ autour de l'axe longitudinal du crayon.

Ainsi, les faces d'appui des deux contre touches 120, 121 s'étendent tangentiellement à deux plans d'appui orthogonaux qui sont parallèles à l'axe longitudinal du crayon, et dont les traces dans le plan de la figure 2 sont respectivement repérées 122 et 123.

Les libres déplacements en translation des deux contre touches 120, 121, selon les axes X et Y, qui sont permis par les coulissements mutuels des supports 108, 115, et 118, permettent d'obtenir un appui des deux contre touches 120, 121 sur la surface externe du crayon 101, sans générer d'effort radial sur le crayon.

Les deux instruments 10 de mesure de longueur sont respectivement fixés au support 118 par deux supports 124, 125, et s'étendent respectivement selon deux axes longitudinaux 126, 127.

Les axes 126, 127 sont sensiblement orthogonaux, respectivement parallèles aux axes 122, 123, et se coupent en un point sensiblement confondu avec la trace, dans le plan de la figure 2, de l'axe longitudinal du crayon 101.

Chacun des supports 124, 125 comporte une pièce 128, un boitier 129, et une tige 130 montée coulissante dans le boitier 129, selon l'axe 126, 127 longitudinal de l'instrument 10 considéré.

Chaque boitier 129 contient en outre un ressort 131 de rappel. Chaque tige 130 comporte trois faces d'appui 132, 133, et 134. Chaque ressort hélicoïdal 131 est en appui sur une paroi du boitier 129 correspondant ainsi que sur la face d'appui centrale 133 de la tige 130, de sorte que chaque ressort repousse la tige 130 vers le crayon 101, et que la face d'appui d'extrémité 134 de la tige est maintenue en contact avec la face externe de la gaine du crayon.

Ainsi, la face d'appui 134 (servant de touche) et la contre touche 120 de mesure sont plaquées sur deux génératrices diamétralement opposées du crayon, par l'action du ressort 131 correspondant, selon l'axe longitudinal 127 d'un des deux instruments 10.

De la même façon, la face d'appui 134 (servant de touche) et la seconde contre touche 121 de mesure sont plaquées sur le crayon, par l'action du ressort 131 correspondant, selon l'axe longitudinal 126 de l'autre instrument 10.

Par ailleurs, chaque instrument 10 est fixé au support 124, 125 correspondant de façon à ce que la pointe de touche 10a de l'instrument soit en appui sur la seconde face d'appui 132 d'extrémité de la tige 130 correspondante.

La mesure, selon l'axe 126, d'un « diamètre » (i.e. d'une plus grande dimension transversale) du crayon peut ainsi être réalisée en mesurant l'écartement entre la face d'appui 134 de la tige 130 mobile selon l'axe 126, qui forme une touche de mesure, et la contre touche 121, cette mesure étant obtenue par l'instrument 10 s'étendant selon l'axe 126.

De la même manière, la mesure selon l'axe 127, d'un second « diamètre » du crayon peut être réalisée en mesurant l'écartement entre la face d'appui 134 de la tige 130 mobile selon l'axe 127, et la contre touche 120, au moyen de l'instrument 10 s'étendant selon l'axe 127.

Chacun des supports 124, 125 d'instrument 10, incluant la tige mobile 130 correspondante et la touche de mesure 134 associée, est respectivement monté sur le support 118 par l'intermédiaire d'une glissière d'axe 136, 137 respectivement parallèle à l'axe 126, 127 de mesure.

Ceci permet d'écarter les touches 134 des contre touches 120, 121, afin de pouvoir insérer ou retirer le crayon combustible de l'espace s'étendant entre ces touches et contre touches.

Les mouvements des supports 124, 125 par rapport au support 118 peuvent être commandés par un système mécanique (non représenté) actionné par l'opérateur.

L'ensemble 138 incluant les instruments 10 et leurs supports 124, 125, 118, et 115, également dénommé « cassette », peut être désolidarisé du support principal 108, afin de faciliter la maintenance du banc, par exemple pour le remplacement des capteurs 10, 11.

Par référence aux figures 3 et 4, chaque instrument 10 comporte un capteur LVDT 11 monté à l'intérieur d'une structure étanche à l'air et à l'eau.

Le capteur 11 peut être par exemple un capteur de précision proposé par la société SOLARTRON (Royaume-Uni) sous la référence DP/2/S.

Un tel capteur comporte un corps 14 cylindrique allongé selon un axe longitudinal 15, ainsi qu'une pointe de touche 17 mobile en translation selon cet axe, par rapport au corps 14.

Le corps 14 contient des bobinages et délimite une première cavité recevant un noyau magnétique (non représentés). Le capteur contient en outre une liaison mécanique reliant la pointe de touche au noyau magnétique, et généralement un ressort de rappel de la pointe de touche dans sa position d'éloignement maximal du corps du capteur. Cette liaison est protégée par un soufflet 20 en élastomère qui s'étend entre la pointe de touche 17 et le corps 14.

A l'extrémité longitudinale du corps 14 opposée à la pointe de touche 17, s'étend un câble 21 servant à relier les bobinages du capteur 11 à un appareil (non représenté) d'alimentation et de traitement de signaux qui délivre en sortie des signaux ou données représentatifs de la position de la pointe de touche par rapport au corps du capteur.

Une partie du corps 14 est engagée - avec un faible jeu - dans un fourreau 12 qui délimite une cavité 22 dans laquelle s'étend le départ du câble 21. Un joint torique 28 assure l'étanchéité entre le corps 14 et le fourreau 12.

La cavité 22 est remplie d'un matériau de scellage étanche tel qu'une résine ou un mastic ; et une première extrémité du fourreau 12 est obturée par une bague 23 au travers de laquelle s'étend le câble 21.

La seconde extrémité 12a du fourreau 12 est filetée intérieurement pour recevoir l'extrémité filetée 24 d'un manchon 25 faisant partie d'une enveloppe 13.

Le manchon 25 comporte une collerette annulaire 26 sur laquelle est fixée une première extrémité longitudinale d'un soufflet métallique 18, la deuxième extrémité longitudinale du soufflet étant obturée par une pièce 19 sensiblement en forme de disque, d'axe 15.

Le soufflet 18 présente un axe longitudinal qui correspond à l'axe de plus grande déformation élastique du soufflet, et qui est sensiblement confondu avec l'axe 15 de coulissement de la pointe de touche 17 par rapport au corps 14.

L'enveloppe 13 constituée par le manchon 25, le soufflet 18, et la pièce 19, peut ainsi être fixée au corps 14 du capteur 11 par l'intermédiaire du fourreau 12, un joint 27 assurant l'étanchéité entre le corps 14 et le manchon 25 (cf. figure 4).

Cette enveloppe 13 qui prolonge le corps 14 selon l'axe longitudinal 15 délimite ainsi, avec le corps, une cavité étanche 16 renfermant la pointe de touche 17 et autorisant le déplacement de cette pointe dans la cavité 16.

La capacité de déformation élastique du soufflet de l'enveloppe selon l'axe longitudinal du capteur est suffisante pour que la pointe de touche 17 soit sensible au déplacement de la pièce d'appui 19 de l'enveloppe s'étendant dans le prolongement de la pointe de touche, sous l'effet d'un effort d'appui exercé par un objet à mesurer sur la face externe 10a de cette pièce 19.

La face externe 10a de la pièce 19 sert ainsi de pointe de touche pour l'instrument 10.

En d'autres termes, la raideur longitudinale du soufflet 18 est suffisamment faible pour que la pièce 19 puisse se déplacer selon l'axe longitudinal 15 du soufflet, sur tout ou partie de la course de la pointe de touche 17, au contact de celle-ci, de sorte que le déplacement relatif de la pièce 19 placée au contact d'un objet à mesurer, par rapport au corps du capteur, est transmis à la pointe de touche 17 et au noyau magnétique du capteur inductif.

Comme illustré figure 4, la pièce d'appui 19 de l'enveloppe 13 s'étendant dans le prolongement de la pointe de touche 17 du capteur, est séparée de la pointe de touche par une distance 30 lorsque l'instrument 10 est à la pression atmosphérique.

Par le choix d'un soufflet d'un diamètre et d'une raideur axiale appropriés, la face interne 31 de la pièce 19 vient au contact de la pointe de touche du capteur inductif lorsque l'instrument 10 est placé dans la piscine, aux profondeurs d'immersion comprises entre celles des extrémités du crayon à contrôler.

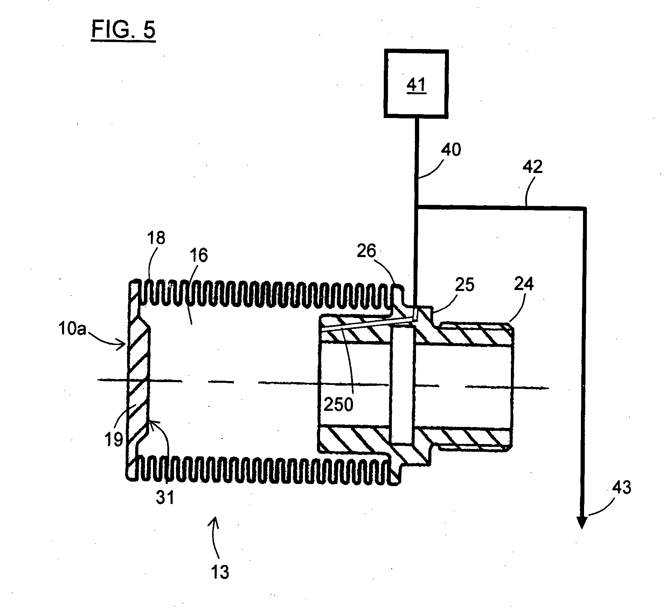

La figure 5 illustre un mode de réalisation de l'enveloppe 13 et son utilisation pour des mesures de crayons plus longs (5 mètres par exemple), grâce à un système de compensation de la pression dans l'enveloppe à soufflet de l'instrument de mesure.

A cet effet, le corps du manchon 25 est percé d'un canal 250 dont une première extrémité débouche dans la cavité 16 et dont une seconde extrémité communique avec un conduit 40 reliant l'enveloppe 13 à une source 41 de gaz sous pression.

Un conduit de dérivation 42 relié au conduit 40 par sa première extrémité, débouche dans la piscine par sa seconde extrémité 43 dont la profondeur d'immersion est de préférence peu supérieure à la profondeur d'immersion de l'enveloppe 13.

La source 41 délivrant le gaz sous pression dans la cavité 16 d'une part et jusqu'à l'extrémité 43 du conduit 42 - par laquelle le gaz peut s'échapper dans la piscine -, d'autre part, permet de maintenir la cavité 16 à une pression sensiblement égale à la pression correspondant à la profondeur d'immersion de l'extrémité 43.

Selon un mode de réalisation, un procédé de contrôle dimensionnel d'un crayon combustible comporte successivement les opérations suivantes :
- on positionne le chariot 108 et la cassette 138 en position basse, et on éloigne les touches 130,132,134 des contre touches 120, 121 ;
- on déplace le crayon sous eau pour le disposer sur le banc de profilométrie, à l'aide d'une pince de transfert (non représentée), et on place le crayon en butée sur support inférieur 104 ;
- on met en place la contrepointe 106 en appui sur le crayon et on maintient le crayon 101 à contrôler dans une position sensiblement verticale, sous le niveau 103 de l'eau d'une piscine ;
- on choisit et on règle la position angulaire du crayon à l'aide d'une caméra immergée dans la piscine ;
- une photographie du positionnement angulaire du crayon peut être prise pour pouvoir à nouveau positionner le crayon avec la même position angulaire lors de mesures ultérieures ;
- le cas échéant, pour étalonner les deux capteurs LVDT à la température ambiante dans l'eau, on rapproche les deux contre touches 120, 121 et les deux touches de mesure mobiles 130, 132, 134 sur lesquelles s'appuient respectivement deux pointes de touches 10a respectives de deux instruments 10, jusqu'à les mettre au contact de la surface externe de l'étalon qui est intégré dans la contrepointe 106, puis on mesure deux plus grandes dimensions transversales de l'étalon à l'aide des deux instruments 10 ; on éloigne ensuite les touches 134 de l'étalon;
- on rapproche les deux contre touches 120, 121 et les deux touches de mesure mobiles 130, 132, 134 sur lesquelles s'appuient respectivement deux pointes de touches 10a respectives de deux instruments 10, jusqu'à les mettre au contact de la surface externe du crayon ;
- on mesure deux plus grandes dimensions transversales du crayon à l'aide des deux instruments 10 ;
- on déplace, le long du crayon, le support 108 auquel sont fixés les contre touches 120, 121, les touches de mesure mobiles 130, 132, 134, et les instruments 10, et on effectue de nouvelles mesures des deux plus grandes dimensions transversales du crayon, à l'aide des deux instruments 10.

La mesure des deux « diamètres » peut être réalisée en continu. La cassette porte-capteur peut pour cela être déplacée verticalement avec une vitesse constante, et les mesures réalisées avec une fréquence fixe, par exemple en réalisant une mesure par pas de 0.1 mm mesuré selon l'axe longitudinal du crayon.

L'enregistrement des mesures permet ensuite le tracé de deux profils des variations respectives de deux « diamètres » du crayon qui sont respectivement mesurés selon deux rayons formant un angle de 90°.

Après que les mesures des « diamètres » du crayon aient été ainsi faites, on peut « ouvrir » la cassette en éloignant les touches 134 des contre touches 120, 121 ; la contrepointe 106 peut ensuite être relevée, la fixation du crayon desserrée, puis le crayon retiré du banc à l'aide de la pince de transfert.

Par ailleurs, le banc permet aussi, en maintenant la cassette fixe et en faisant tourner le crayon sur lui-même, de faire une mesure de profil radial, c'est-à-dire une mesure d'ovalisation.

## Revendications

1. Instrument (10) de mesure de longueur comportant un capteur (11) inductif comportant un corps (14) allongé et une pointe de touche (17) mobile selon l'axe longitudinal (15) du capteur, dans lequel le corps (14) contient des bobinages et délimite une première cavité recevant un noyau magnétique, **caractérisé en ce qu'**il comporte en outre une enveloppe (13) qui prolonge le corps (14) selon l'axe longitudinal (15) et qui délimite, avec le corps (14), une seconde cavité (16) étanche renfermant la pointe de touche (17), l'enveloppe comportant une pièce (18) déformable étanche entourant la pointe de touche (17) et une partie d'appui (19) s'étendant dans le prolongement de la pointe de touche (17), et **en ce que** :
- la capacité de déformation élastique de l'enveloppe, selon l'axe longitudinal (15), est supérieure à la capacité de déformation élastique de cette enveloppe selon des axes orthogonaux à cet axe longitudinal ; et
- la capacité de déformation élastique de l'enveloppe selon l'axe longitudinal (15) est suffisante pour que la pointe de touche (17) soit sensible au déplacement de la partie d'appui (19) sous l'effet d'un effort d'appui exercé sur cette partie d'appui (19).

2. Instrument selon la revendication 1 dans lequel la partie d'appui (19) est distante de la pointe de touche (17) du capteur inductif lorsque l'instrument est à la pression atmosphérique, tandis que cette partie d'appui (19) vient au contact de la pointe de touche (17) lorsque l'instrument est placé dans un milieu où règne une pression supérieure à la pression atmosphérique.

3. Instrument selon l'une quelconque des revendications 1 ou 2 dans lequel la pièce (18) déformable étanche présente une raideur axiale selon l'axe longitudinal (15), et une raideur radiale supérieure à la raideur axiale, de sorte que l'axe de plus grande déformation élastique de la pièce (18) est sensiblement confondu avec l'axe (15) de coulissement de la pointe de touche.

4. Instrument selon l'une quelconque des revendications 1 à 3 dans lequel la pièce (18) déformable étanche présente une forme de révolution, en particulier une forme tubulaire annelée, et est essentiellement constituée par un soufflet.

5. Instrument selon l'une quelconque des revendications 1 à 4 dans lequel le rapport de la raideur radiale de l'enveloppe (13) déformable étanche à sa raideur axiale, est supérieur à 10, en particulier supérieur à 100 ou à 1000.

6. Instrument (10) selon l'une quelconque des revendications 1 à 5, comportant un capteur (11) inductif de type LVDT, dans lequel :
- l'enveloppe comporte un soufflet (18) présentant un axe longitudinal (15) qui correspond à l'axe de plus grande déformation élastique du soufflet, et qui est sensiblement confondu avec l'axe de coulissement de la pointe de touche ;
- le soufflet (18) est fixé de façon étanche au corps du capteur par une première de ses extrémités longitudinales;
- l'enveloppe comporte un tampon (19) obturant le soufflet à sa deuxième extrémité longitudinale ; et
- la raideur longitudinale du soufflet est suffisamment faible pour que le tampon (19) puisse se déplacer selon l'axe longitudinal (15) commun du soufflet (18) et du capteur (11), sur une partie substantielle au moins de la course de la pointe de touche (17), au contact de celle-ci, de sorte que le déplacement relatif du tampon (19) placé au contact d'un objet à mesurer, par rapport au corps du capteur, est transmis à la pointe de touche (17) et au noyau magnétique du capteur inductif, la face externe (10a) du tampon (19) servant de pointe de touche pour l'instrument.

7. Instrument selon l'une quelconque des revendications 1 à 6 dans lequel une partie au moins de l'enveloppe (13) déformable, en particulier le soufflet (18) et la partie d'appui ou tampon (19), est métallique.

8. Dispositif (100) de contrôle de la géométrie de la face externe d'un crayon (101) de combustible, qui comporte au moins un instrument (10) selon l'une quelconque des revendications 1 à 7.

9. Dispositif selon la revendication 8 qui comporte une structure (110) fixe et un support (108, 115, 118, 124, 125) d'instrument qui est mobile en translation par rapport à la structure fixe, selon au moins un axe (Z, 113), en particulier selon un premier axe (Z, 113) et selon au moins un second axe (X, Y) perpendiculaire au premier axe.

10. Dispositif selon la revendication 9 dans lequel le support d"instrument comporte une table (108, 115, 118) à mouvements (X, Y) croisés portant des contre touches (120, 121) et autorisant un déplacement relatif, selon au moins le second axe (X, Y), des contre touches (120, 12) par rapport à un crayon (101) à contrôler.

11. Dispositif selon la revendication 9 ou 10 dans lequel le support d'instrument reçoit deux instruments (10) selon l'une quelconque des revendications 1 à 7 : i) un premier instrument dont l'axe (15, 126) de moins grande raideur de l'enveloppe déformable est sensiblement orthogonal à l'axe (Z, 113) de translation du support d'instrument ; et ii) un second instrument, sensiblement identique au premier instrument, dont l'axe (15, 127) de moins grande raideur de l'enveloppe déformable est sensiblement orthogonal à l'axe (Z, 113) de translation du support d'instrument ainsi qu'à, le cas échéant, l'axe (15, 126) de déformation privilégiée du premier instrument.

12. Dispositif selon l'une quelconque des revendications 8 à 11 dans lequel un support d'instrument comporte deux pièces (120, 121) servant de contre touches pour un crayon (101) à contrôler, deux pièces (130, 132, 134) mobiles servant de touches de mesure et sur lesquelles s'appuient les parties d'appui d'enveloppe (10a, 19) respectives de deux instruments (10), et des moyens de rappel (133) servant à maintenir la surface externe d'un crayon à contrôler au contact de ces touches de mesure et contre touches.

13. Dispositif selon l'une quelconque des revendications 8 à 12, qui comporte un étalon consistant essentiellement en une pièce cylindrique de section circulaire, agencée pour s'étendre dans le prolongement de l'extrémité supérieure d'un crayon à contrôler, et dont le diamètre correspond à la valeur nominale du diamètre du crayon, afin de permettre un calibrage des instruments de mesure par une mesure du (des) diamètre(s) de cet étalon.

14. Procédé de contrôle de la géométrie de la face externe d'un crayon (101) de combustible, dans lequel on utilise au moins un instrument (10) selon l'une quelconque des revendications 1 à 7 ou un dispositif (100) selon l'une quelconque des revendications 8 à 13, et dans lequel :
- on maintient un crayon (101) à contrôler dans une position sensiblement verticale, sous le niveau (103) de l'eau d'une piscine;
- on choisit la position angulaire du crayon ;
- on met en place deux contre touches (120, 121) et deux touches de mesure mobiles (130, 132, 134) sur lesquelles s'appuient respectivement deux pointes de touches (10a) respectives de deux instruments (10), contre la surface externe du crayon ;
- on mesure deux plus grandes dimensions transversales du crayon à l'aide des deux instruments (10) ;
- on déplace, par rapport au crayon, un support (108) auquel sont fixés les contre touches (120, 121), les touches de mesure mobiles (130, 132, 134) et les instruments (10), et on effectue une nouvelle mesure des deux plus grandes dimensions transversales du crayon à l'aide des deux instruments (10).

15. Procédé selon la revendication 14 dans lequel on déplace le support (108) le long du crayon pour établir un profil des variations des plus grandes dimensions transversales du crayon le long de l'axe longitudinal du crayon.

16. Procédé selon la revendication 15 dans lequel on fait tourner le crayon selon son axe longitudinal pour réaliser une mesure d'ovalisation du crayon.

17. Procédé selon l'une des revendications 14 à 16 dans lequel on compense la pression d'immersion de l'enveloppe (13) de l'instrument de mesure, en délivrant un gaz sous pression dans la seconde cavité (16) et jusqu'à l'extrémité (43) immergée d'un conduit (42) par laquelle le gaz peut s'échapper.

18. Procédé selon l'une des revendications 14 à 17 dans lequel, pour étalonner les deux capteurs inductifs à la température ambiante dans l'eau, on rapproche deux contre touches (120, 121) et deux touches de mesure mobiles (130, 132, 134) sur lesquelles s'appuient respectivement deux pointes de touches (10a) respectives de deux instruments (10), jusqu'à les mettre au contact de la surface externe d'un étalon, et on mesure deux plus grandes dimensions transversales de l'étalon à l'aide des deux instruments (10).

## Patentansprüche

1. Längenmessinstrument (10), einen Induktionssensor (11) umfassend, der aus einem länglichen Körper (14) besteht und einer Tastspitze (17), die längs der Längsachse (15) des Sensors beweglich ist, wobei der Körper (14) Spulen enthält und einen ersten Hohlraum umschließt, der einen Magnetkern aufnimmt, **dadurch gekennzeichnet, dass** er außerdem einen Mantel (13) aufweist, der den Körper (14) in Richtung der Längsachse (15) verlängert und der mit dem Körper (14) einen zweiten, dichten Hohlraum (16) umgrenzt, der die Tastspitze (17) enthält, wobei der Mantel ein verformbares, dichtes Stück (18) aufweist, das die Tastspitze (17) umgibt, und einen Andruckteil (19), der sich in der Verlängerung der Tastspitze (17) erstreckt, und dadurch, dass:
- die elastische Verformbarkeit des Mantels längs der Längsachse (15) größer ist, als die elastische Verformbarkeit dieses Mantels längs der zu dieser Längsachse senkrechten Achsen, und
- die elastische Verformbarkeit des Mantels längs der Längsachse (15) dafür ausreichend ist, dass die Tastspitze (17) auf die Verschiebung des Andruckteils (19) unter der Wirkung einer Andruckkraft empfindlich ist, die auf diesen Andruckteil (19) ausgeübt wird.

2. Instrument nach Patentanspruch 1, in dem der Andruckteil (19) von der Tastspitze (17) des Induktionssensors entfernt ist, wenn sich das Instrument auf Atmosphärendruck befindet, während dieser Andruckteil (19) mit der Tastspitze (17) in Kontakt kommt, wenn das Instrument in ein Milieu gesetzt wird, in dem ein höherer Druck herrscht, als der Atmosphärendruck.

3. Instrument nach irgendeinem der Patentansprüche 1 oder 2, in dem das verformbare, dichte Stück (18) eine axiale Steifigkeit längs der Längsachse (15) und eine radiale Steifigkeit größer als die axiale Steifigkeit aufweist, derart, dass die Achse der größten elastischen Verformung des Stückes (18) mit der Gleitachse (15) der Tastspitze im Wesentlichen zusammenfällt.

4. Instrument nach irgendeinem der Patentansprüche 1 bis 3, in dem das verformbare, dichte Stück (18) rotationssymmetrische Form hat, insbesondere die Form einer geringelten Röhre, und im Wesentlichen aus einem Balg besteht.

5. Instrument nach irgendeinem der Patentansprüche 1 bis 4, in dem das Verhältnis der radialen Steifigkeit des verformbaren, dichten Mantels (13) zu seiner axialen Steifigkeit größer als 10 ist, insbesondere größer als 100 oder als 1000.

6. Instrument (10) nach irgendeinem der Patentansprüche 1 bis 5, einen Induktionssensor des Typs LVDT umfassend, in dem:
- der Mantel einen Balg (18) umfasst, dessen Längsachse (15) der Achse größter elastischer Verformung des Balges entspricht und die mit der Gleitachse der Tastspitze im Wesentlichen zusammenfällt,
- der Balg (18) an einem seiner Längsenden abgedichtet am Sensorkörper befestigt ist,
- der Mantel einen Puffer (19) aufweist, der den Balg an seinem zweiten Längsende schließt, und
- die longitudinale Steifigkeit des Balges ausreichend niedrig ist, damit der Puffer (19) sich längs der gemeinsamen Längsachse (15) des Balges (18) und des Sensors (11) über mindestens einen erheblichen Teil der Bahn der Tastspitze (17), mit dieser in Berührung, verschieben kann, so dass die relative Verschiebung des Puffers (19), der mit einem zu messenden Gegenstand in Kontakt gebracht wurde, gegenüber dem Sensorkörper der Tastspitze (17) und dem Magnetkern des Induktionssensors mitgeteilt wird, wobei die Außenseite (10a) des Puffers (19) dem Instrument als Tastspitze dient.

7. Instrument nach irgendeinem der Patentansprüche 1 bis 6, in dem mindestens ein Teil des verformbaren Mantels (13), insbesondere der Balg (18) und der Andruckteil oder Puffer (19), aus Metall besteht.

8. Vorrichtung (100) zur Kontrolle der Form der Außenseite eines Brennstabes (101), die mindestens ein Instrument (10) nach irgendeinem der Patentansprüche 1 bis 7 aufweist.

9. Vorrichtung nach Patentanspruch 8, die eine feststehende Konstruktion (110) umfasst und einen Instrumententräger (108, 115, 118, 124, 125), der relativ zur feststehenden Konstruktion auf mindestens einer Achse (Z, 113) versetzbar ist, insbesondere auf mindestens einer Achse (Z, 113) versetzbar ist und auf mindestens einer zweiten Achse (X, Y), die auf der ersten Achse senkrecht steht.

10. Vorrichtung nach Patentanspruch 9, in der der Instrumentenhalter einen Tisch (108, 115, 118) mit Kreuzbewegungen (X, Y) umfasst, der Anlagebacken (120, 121) trägt und eine Relativbewegung der Anlagebacken (120, 12) relativ zu einem zu kontrollierenden Stab (101) längs mindestens der zweiten Achse (X, Y) erlaubt.

11. Vorrichtung nach Patentanspruch 9 oder 10, in der der Instrumentenhalter zwei Instrumente (10) nach irgendeinem der Patentansprüche 1 bis 7 aufnimmt: i) ein erstes Instrument, dessen Achse (15, 126) niedrigster Steifigkeit des verformbaren Mantels auf der Verschiebungsachse (Z, 113) des Instrumentenhalters senkrecht steht, und ii) ein zweites, zum ersten im Wesentlichen identisches Instrument, dessen Achse (15, 127) niedrigster Steifigkeit des verformbaren Mantels auf der Verschiebungsachse (Z, 113) des Instrumentenhalters senkrecht steht, sowie gegebenenfalls auf der Hauptverformungsachse (15, 126) des ersten Instruments.

12. Vorrichtung nach irgendeinem der Patentansprüche 8 bis 11, in der ein Instrumentenhalter zwei Stücke (120, 121) aufweist, die als Anlagebacken für einen zu kontrollierenden Brennstab (101) dienen, zwei bewegliche Stücke (130, 132, 134), die als Messbacke dienen und an die sich die jeweiligen Andruckteile (10a, 19) des Mantels zweier Instrumente (10) anlegen, und Rückstellmittel (133), dazu dienend, die Außenfläche eines zu kontrollierenden Stabes mit diesen Messbacken und Anlagebacken in Berührung zu halten.

13. Vorrichtung nach irgendeinem der Patentansprüche 8 bis 12, die ein Eichmaß umfasst, das im Wesentlichen aus einem zylindrischen Stück kreisförmigen Querschnitts besteht, derart angeordnet, dass es sich in der Verlängerung des oberen Endes eines zu kontrollierenden Stabes erstreckt und dessen Durchmesser dem Nennwert des Durchmessers des Stabes entspricht, um ein Kalibrieren des Messinstrumentes durch eine Messung des/der Durchmesser/s dieses Eichmaßes zu ermöglichen.

14. Verfahren zur Kontrolle der Form der Außenfläche eines Brennstabes (101), in dem mindestens Instrument (10) nach irgendeinem der Patentansprüche 1 bis 7 oder eine Vorrichtung (100) nach irgendeinem der Patentansprüche 8 bis 13 verwendet wird, und in dem:
- ein zu kontrollierender Stab (101) unter dem Wasserspiegel (103) eines Reaktorbeckens in einer im Wesentlichen vertikalen Stellung gehalten wird,
- die Winkelstellung des Stabes gewählt wird,
- an der Außenfläche des Stabes zwei Anlagebacken (120, 121) und zwei bewegliche Messbacken (130, 132, 134) angeordnet werden, auf die zwei entsprechende Tastspitzen (10a) von zwei Instrumenten (10) drücken,
- mit Hilfe der beiden Instrumente (10) zwei größte Querabmessungen des Stabes gemessen werden,
- ein Halter (108), an dem die Anlagebacken (120, 121), die beweglichen Messbacken (130, 132, 134) und die Instrumente (10) befestigt sind, relativ zum Stab verschoben wird, und mit Hilfe der beiden Instrumente (10) eine neue Messung der beiden größten Querabmessungen des Stabes erfolgt.

15. Verfahren nach Patentanspruch 14, in dem der Halter (108) am Stab entlang verschoben wird, um ein Profil der Schwankungen der größten Querabmessungen des Stabes längs der Längsachse des Stabes aufzunehmen.

16. Verfahren nach Patentanspruch 15, in dem der Stab um seine Längsachse gedreht wird, um eine Messung der Ovalisierung des Stabes vorzunehmen.

17. Verfahren nach irgendeinem der Patentansprüche 14 bis 16, in dem der Eintauchdruck des Mantels (13) des Messinstrumentes kompensiert wird, indem ein Druckgas in den zweiten Hohlraum (16) und bis zum eingetauchten Ende (43) einer Leitung (42), durch die das Gas austreten kann, eingeleitet wird.

18. Verfahren nach einem der Patentansprüche 14 bis 17, in dem zum Kalibrieren der beiden Induktionssensoren bei der Umgebungstemperatur im Wasser zwei Anlagebacken (120, 121) und zwei bewegliche Messbacken (130, 132, 134), an die zwei entsprechende Tastspitzen (10a) zweier Instrumente (10) andrücken, genähert werden, bis sie mit der Außenfläche eines Eichmaßes in Berührung kommen, und mit Hilfe der beiden Instrumente (10) zwei größte Querabmessungen des Eichmaßes gemessen werden.

## Claims

1. A length measurement instrument (10) comprising an inductive sensor (11) comprising an elongate body (14) and a feeler tip (17) movable along the longitudinal axis (15) of the sensor, in which the body (14) contains windings and defines a first cavity receiving a magnetic core, the instrument being **characterized in that** it further comprises a casing (13) extending the body (14) along the longitudinal axis (15) and co-operating with the body (14) to define a second cavity (16) that is leaktight and that contains the feeler tip (17), the casing comprising a watertight deformable part (18) surrounding the feeler tip (17) and an abutment portion (19) extending in line with the feeler tip (17), and **in that**:
· the capacity of the casing for elastic deformation along the longitudinal axis (15) is greater than the capacity of the casing for elastic deformation along axes orthogonal to the longitudinal axis; and
· the capacity for elastic deformation along the longitudinal axis (15) is sufficient for the feeler tip (17) to be sensitive to movement of the abutment portion (19) under the effect of an abutment force exerted on the abutment portion (19)

2. An instrument according to claim 1, wherein the abutment portion (19) is spaced apart from the feeler tip (17) of the inductive sensor when the instrument is at atmospheric pressure, with said abutment portion (19) coming into contact with the feeler tip (17) when the instrument is placed in a medium in which pressure is greater than atmospheric pressure.

3. An instrument according to claim 1 or claim 2, wherein the watertight deformable part (18) presents axial stiffness along the longitudinal axis (15) and radial stiffness greater than its axial stiffness, such that the axis of greatest elastic deformation of the part (18) coincides substantially with the sliding axis (15) of the feeler tip.

4. An instrument according to any one of claims 1 to 3, wherein the watertight deformable part (18) is in the form of a body of revolution, in particular in the form of a corrugated tube, and is constituted essentially by a bellows.

5. An instrument according to any one of claims 1 to 4, wherein the ratio of the radial stiffness of the leaktight deformable casing (13) to its axial stiffness is greater than 10, and in particular greater than 100 or greater than 1000.

6. An instrument (10) according to any one of claims 1 to 5, comprising an inductive sensor (11) of the LVDT type, wherein:
· the casing includes a bellows (18) presenting a longitudinal axis (15) that corresponds to the axis of greatest elastic deformation of the bellows, and that coincides substantially with the sliding axis of the feeler tip;
· the bellows (18) is fastened in leaktight manner to the body of the sensor at a first one of its longitudinal ends;
· the casing includes a pad (19) closing the bellows at its second longitudinal end; and
· the longitudinal stiffness of the bellows is small enough to enable the pad (19) to move along the common longitudinal axis (15) of the bellows (18) and of the sensor (11) over at least a substantial fraction of the stroke of the feeler tip (17) and in contact therewith, whereby movement of the pad (19) placed in contact with an article for measuring and moving relative to the body of the sensor is transmitted to the feeler tip (17) and to the magnetic core of the inductive sensor, the outside face (10a) of the pad (19) serving as a feeler tip for the instrument.

7. An instrument according to any one of claims 1 to 6, wherein at least a portion of the deformable casing (13), in particular the bellows (18) and the abutment portion or pad (19), is made of metal.

8. A device (100) for inspecting the shape of the outside face of a fuel rod (101), the device including at least one instrument (10) according to any one of claims 1 to 7.

9. A device according to claim 8 comprising a stationary structure (110) and an instrument support (108, 115, 118, 124, 125) that is movable in translation relative to the stationary structure along at least one axis (Z, 113), in particular along a first axis (Z, 113) and along at least one second axis (X, Y) perpendicular to the first axis.

10. A device according to claim 9, wherein the instrument support comprises an X,Y cross motion table (108, 115, 118) carrying backstops (120, 121) and allowing the backstops (120, 121) to move relative to a rod (101) for inspection at least along the second axis (X,Y).

11. A device according to claim 9 or claim 10, wherein the instrument support receives two instruments (10) according to any one of claims 1 to 7, namely: i) a first instrument in which the axis (15, 126) of least stiffness of the deformable casing is substantially orthogonal to the axis (Z, 113) in which the instrument support moves in translation; and ii) a second instrument, substantially identical to the first instrument, in which the axis (15, 127) of least stiffness of the deformable casing is substantially orthogonal to the axis (Z, 113) in which the instrument support moves in translation and also, where appropriate, to the axis (15, 126) of preferred deformation of the first instrument.

12. A device according to any one of claims 8 to 11, wherein an instrument support includes two parts (120, 121) acting as backstops for a rod (101) for inspection, two movable parts (130, 132, 134) acting as measurement feelers and against which the abutment portions (10a, 19) of the respective casings of the two instruments (10) come into abutment, and return means (133) for keeping the outside surface of a rod for inspection in contact with the measurement feelers and with the backstops.

13. A device according to any one of claims 8 to 12, including a calibration stud essentially consisting in a cylindrical part of circular section that is arranged to extend the top end of a rod for inspection and that is of diameter that corresponds to the nominal value of the diameter of the rod in order to enable the measurement instruments to be calibrated by measuring the diameter(s) of the stud.

14. A method of inspecting the shape of the outside face of a fuel rod (101) in which use is made of at least one instrument (10) according to any one of claims 1 to 7 or of a device (100) according to any one of claims 8 to 13, and wherein the following steps are performed:
· holding a rod (101) for inspection in a substantially vertical position under the level (103) of water in a pool;
· selecting the angular position of the rod;
· causing two backstops (120, 121) and two movable measurement feelers (130, 132, 134) having two respective feeler tips (10a) of two respective instruments (10) in abutment thereagainst to be put into place against the outside surface of the rod;
· measuring two greatest transverse dimensions of the rod with the help of the two instruments (10); and
· causing a support (108) to which the backstops (120, 121), the movable measurement feelers (130, 132, 134), and the instruments (10) are fastened to move relative to the rod and taking new measurements of two greatest transverse dimensions of the rod with the help of the two instruments (10).

15. A method according to claim 14, wherein the support (108) is moved along the rod in order to establish a profile of the variations in the greatest transverse dimensions of the rod along the longitudinal axis of the rod.

16. A method according to claim 15, wherein the rod is caused to turn about its longitudinal axis in order to take a measurement of the ovalization of the rod.

17. A method according to any one of claims 14 to 16, wherein the immersion pressure of the casing (13) of the measurement instrument is compensated by delivering gas under pressure into the second cavity (16) and to the immersed end (43) of a duct (42) from which the gas can escape.

18. A method according to any one of claims 14 to 17, wherein, in order to calibrate the two inductive sensors at the ambient temperature in the water, two backstops (120, 121) and two movable measurement feelers (130, 132, 134) having two respective feeler tips (10a) of two respective instruments (10) in abutment thereagainst are caused to move until they come into contact with the outside surface of a calibration stud, and measuring two greatest transverse dimensions of the stud with the help of the two instruments (10).
